(19) Europäisches Patentamt
European Patent Office
Office européen des brevets

(11) Veröffentlichungsnummer: **0 307 839**
**B1**

# (12) EUROPÄISCHE PATENTSCHRIFT

(45) Veröffentlichungstag der Patentschrift: **14.11.90**

(51) Int. Cl.[5]: **C01B 25/37**, C23C 22/80 // C25D13/20

(21) Anmeldenummer: **88114872.0**

(22) Anmeldetag: **12.09.88**

## (54) Verfahren zur Herstellung von aktivierenden Titanphosphaten für die Zinkphosphatierung.

(30) Priorität: **16.09.87 DE 3731049**

(43) Veröffentlichungstag der Anmeldung: **22.03.89 Patentblatt 89/12**

(45) Bekanntmachung des Hinweises auf die Patenterteilung: **14.11.90 Patentblatt 90/46**

(84) Benannte Vertragsstaaten: **DE**

(56) Entgegenhaltungen:
**DE-A- 2 902 916**
**US-A- 2 874 081**
**US-A- 4 539 051**

(73) Patentinhaber: **Henkel Kommanditgesellschaft auf Aktien, Postfach 1100 Henkelstrasse 67, D-4000 Düsseldorf 1(DE)**

(72) Erfinder: **Härer, Jürgen, Dr., Johannes-Hesse-Strasse 3, D-4000 Düsseldorf 13(DE)**
Erfinder: **Christophliemk, Peter, Dr., Rudolf-Breltscheldstrasse 61, D-4000 Düsseldorf 13(DE)**
Erfinder: **Roland, Wolf-Achim, Dr., Spreestrasse 60, D-5650 Solingen(DE)**
Erfinder: **Gottwald, Karl-Heinz, Auf dem Dolche 10, D-5042 Erftstadt(DE)**

EP 0 307 839 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von aktivierenden Titanphosphaten, mit denen Metalloberflächen aus Eisen, Stahl, Zink oder verzinktem Stahl, Aluminium oder aluminiertem Stahl vor einer Phosphatierung mit Zinkionen enthaltenden Phosphatierbädern aktiviert werden können.

Die Zinkphosphatierung, d.h. die Behandlung von Metalloberflächen mit Zinkionen enthaltenden wäßrigen Lösungen, ist ein seit langer Zeit verbreitetes Verfahren, mit dem Oberflächen aus Eisen, Stahl, Zink oder verzinktem Stahl oder Aluminium oder aluminiertem Stahl hinsichtlich ihrer Korrosionsbeständigkeit verbessert werden und damit gleichzeitig so vorbereitet werden, daß eine gleichmäßige Ausbildung und Haftung einer später aufgebrachten organischen Beschichtung auf den Metalloberflächen garantiert ist. Von anwendungstechnischem Interesse ist in diesem Zusammenhang besonders das sogenannte "Niedrigzink-Verfahren", in dem das Verhältnis von Zink- zu Phosphationen in der Behandlungslösung kleiner als 1 : 12 ist und das Metalloberflächen aus der oben genannten Gruppe besonders für die Beschichtung mit Oberflächenlacken im Wege der sogenannten "kathodischen Elektrotauchlackierung" (K(E)TL) vorbereitet.

Die Vorbehandlung der jeweiligen metallischen Oberflächen vor dem eigentlichen Phosphatierungsschritt hat dabei einen eminent großen Einfluß auf die Ausbildung einer qualitativ hochwertigen Zinkphosphatschicht und nimmt damit auch unmittelbaren Einfluß auf die angestrebten Verfahrensziele, nämlich einen hohen Korrosionsschutz der und eine gute Lackhaftung auf den metallischen Oberflächen. Daher kommt den Verfahrensschritten große Bedeutung zu, die der eigentlichen Zinkphosphatierung vorgelagert sind: Die Reinigung mit einem alkalischen und/oder sauren Reiniger und die anschließende Aktivierung der metallischen Oberflächen. Während saure Reiniger oft einen nachteiligen Einfluß auf die Ausbildung der Zinkphosphatschichten haben, der u.a. zu einer Vergröberung der Schichtstruktur sowie einer Verlängerung der Zeit führt, die für die Ausbildung einer die Oberflächen gleichmäßig bedeckenden Zinkphosphatschicht erforderlich ist, kann der Aktivierungsschritt den unerwünschten Effekten der Reinigungsreagenzien entgegenwirken. Üblicherweise werden heute beide Schritte voneinander getrennt, insbesondere dann, wenn die Phosphatierlösung im Niedrigzink-Phosphatierverfahren durch einen Tauchvorgang aufgebracht werden soll.

Man unterscheidet zwischen mechanischer Aktivierung der Metalloberflächen einerseits, die üblicherweise durch Bürsten, Schmirgeln oder Sandstrahlen der Oberflächen bewirkt wird, sowie einer chemischen Aktivierung andererseits. Im Zuge der chemischen Aktivierung werden durch spezielle Vorspüllösungen vor der eigentlichen Phosphatierung zunächst Kristallkeime auf den gereinigten Metalloberflächen gebildet, an denen die Kristallisation des Zinkphosphats beginnen kann. In der Praxis haben sich als wirksame Keimbildner ausschließlich Titan(IV)orthophosphate bewährt. Diese Aktivierungsmittel werden bevorzugt in einem gesonderten Spülbad unmittelbar vor der Phosphatierung mit den Metalloberflächen in Kontakt gebracht. In Ausnahmefällen ist es auch möglich, Aktivierungsmittel einem - allenfalls mild alkalischen - Reinigerbad zuzusetzen.

Mit einer Aktivierung durch derartige Titanorthophosphatlösungen wird bewirkt, daß sich auf der gesamten Metalloberfläche eine gleichmäßige und geschlossene Zinkphosphatschicht bildet. Dabei sollen sich möglichst schnell (Erhöhung der Keimbildungsgeschwindigkeit) möglichst dicht nebeneinander befindliche Kristalle von Zinkphosphat bilden. Durch diese Schichtverfeinerung wird eine Verminderung der Porosität der resultierenden Phosphatschicht angestrebt. Auf diesem Wege läßt sich auch erreichen, daß die Schichtgewichte (flächenbezogene Massen der Zinkphosphat-Schichten) sinken. Diese werden in g Zinkphosphat/$m^2$ Metalloberfläche angegeben; als Haftgrund für Lacke werden von der Industrie Schichtgewichte von 1,2 bis 4,0 g/$m^2$ gefordert. Außerdem läßt sich durch eine Aktivierung der Metalloberflächen die Mindestphosphatierzeit, d.h. die Zeit bis zur vollständigen Bedeckung der Metalloberflächen mit einer geschlossenen Zinkphosphatschicht, deutlich reduzieren.

Titan(IV)orthophosphate bilden sich allgemein bei der Umsetzung von wäßrigen Titan(IV)salzlösungen mit löslichen Phosphaten bzw. Phosphorsäure aus stark sauren, neutralen und alkalischen Lösungen. Üblicherweise sind jedoch derartige Titan(IV)orthophosphate nicht ohne weiteres für die Aktivierung von Metalloberflächen vor einer Zinkphosphatierung geeignet. Titan(IV)orthophosphate mit aktivierenden Eigenschaften werden nur unter besonderen, im Stand der Technik genau beschriebenen Herstellungsbedingungen erhalten.

Entsprechend der US-A 2 310 239 wird eine geeignete Titanverbindung, beispielsweise aus der Gruppe Titanylsulfat, Kaliumhexafluorotitanat, Titantetrachlorid, Titandioxidhydrat, Titandioxid oder Titandisulfat, zu eine wäßrigen Dinatriumphosphatlösung gegeben. Die resultierende Lösung wird anschließend auf einer rotierenden Trommel zur Trockene eingedampft.

In den Druckschriften CA-A 641 512 und DE-C 11 44 565 wird beschrieben, daß auch andere Phosphate, wie z.B. Tetranatriumdiphosphat, Pentanatriumtriphosphat oder Mononatriumphosphat und Trinatriumphosphat, zur Herstellung von Aktivierungsmitteln mit Titan(IV)verbindungen durchaus geeignet sind, wenn bestimmte Bedingungen bezüglich der Verhältnisse der Reaktionskomponenten und des pH-Wertes bei der Vereinigung beider Komponenten eingehalten werden. Auch Gemische verschiedener Phosphate können verwendet werden, wenn der pH-Wert der Suspension ("Slurry") auf einen Wert zwischen 6 und 9 eingestellt wird.

Ein grundsätzliches Problem der aus dem Stand der Technik bekannten Verfahren ist die Tatsache, daß selbst bei Einhaltung konstanter Reaktionsbedingungen die aktivierende Qualität der erhaltenen Titan(IV)phosphate von Charge zu Charge starken Schwankungen unterworfen ist. Diesen Problemen konnten auch die Lösungsansätze in den genannten Druckschriften nicht beikommen. So führte weder die Vorlage einer möglichst konzentrierten Dinatriumphosphatlösung in Wasser bei 80 °C und anschließende Dispergierung der Titankomponente darin, noch die Umkehr der Reihenfolge der Rohstoffzugabe zu einer optimalen Qualität der aktivierten Produkte. Beide genannten Verfahren lieferten nur Titan(IV)phosphate geringer Qualität mit mäßig schichtverfeinernder Wirkung, die auch durch Variation der Reaktionsparameter nicht wesentlich verbessert werden konnte.

Gemäß DE-C 29 31 799 ist es auch möglich, Titandioxide in geschmolzenem NaOH bei ca. 350 °C aufzuschließen und das entstandene Natriummetatitanat in alkalischer Lösung zu Metatitansäure zu hydrolysieren. Einer derartigen Lösung wird so viel Phosphorsäure zugegeben, daß mit dem überschüssigen Natriumhydroxid Dinatriumphosphat gebildet wird. Nach Abdampfen des Wassers kann das zurückbleibende Aktivierungsmittel unmittelbar verwendet werden. Es ist auch möglich, ein trockenes Pulver dadurch zu erhalten, daß man der Mischung Natriumcarbonat bzw. Natriumhydrogencarbonat als Härter bzw. Trägersubstanz zumischt. Auch dieses Aktivierungsmittel war in seiner aktivierenden Qualität nicht befriedigend. Den heutigen hohen technischen Anforderungen an eine Aktivierung vor dem Phosphatierschritt genügen alle auf den genannten Verfahrenswegen hergestellten Titanphosphate nicht oder nur sehr unvollständig. Insbesondere liegt dies daran, daß trotz einer Beibehaltung der Verfahrensbedingungen Aktivierungsmittel gleichbleibend guter Qualität nicht erhalten werden können.

Die Aufgabe der vorliegenden Erfindung bestand nun darin, ein Verfahren zur Herstellung aktivierender Titan(IV)phosphate für die Zinkphosphatierung zur Verfügung zu stellen, welches auf wirtschaftliche Weise aktivierendes Titanphosphat verfügbar macht, das in der Lage ist, Metalloberflächen gut zu aktivieren. Derartige Produkte sollten insbesondere mit reproduzierbar gleichmäßiger Qualität erhalten werden können.

Die Erfindung betrifft ein Verfahren zur Herstellung von aktivierenden Titanphosphaten für die Zinkphosphatierung durch Umsetzen einer Titanverbindung mit einfachen oder kondensierten Phosphaten in wäßriger Phase, das dadurch gekennzeichnet ist, daß man eine Titan(IV)verbindung, die in wäßriger Phase vollständig oder teilweise gelöst, dispergiert und/oder suspendiert ist, bei Temperaturen oberhalb von 100°C und Drücken oberhalb von 1 bar bei einem pH-Wert im Bereich zwischen 6 und 12 mit einem oder mehreren wasserlöslichen Phosphaten der allgemeinen Formel (I) und/oder (II) und/oder (III) hydrothermal umsetzt

$M_mH_{3-m}PO_4$ (I)

$M_pH_{n+2-p}P_nO_{3n+1}$ (II)

$(M_qH_{1-q}PO_3)_r$ (III)

in denen

M für ein Alkalimetall steht und
m 0, 1, 2 oder 3,
n 2, 3 oder 4,
p 0, 1, 2, ... n + 2 und
q 0 oder 1 bedeuten, und
r eine ganze Zahl von 2 bis 20 bedeuten,

wobei man ein Atomverhältnis Titan:Phosphor von 1:20 bis 1:60 einhält und die entstehenden wäßrigen Dispersionen entweder nach Einstellen von Feststoffgehalten im Bereich von 0,001 bis 10 Gew.-% mit Wasser unmittelbar zur Aktivierung von Metalloberflächen vor einer Zinkphosphatierung einsetzt oder unter Erhalt eines Titan(IV)phosphatpulvers mit einer Restfeuchte $\leq$ 5% auf an sich bekannte Weise entwässert und trocknet.

Unter wäßriger Zubereitung wird hier, wie in der nachfolgenden Beschreibung und in den Patentansprüchen jede Zusammensetzung verstanden, in der eine oder mehrere der nachfolgend genannten Verbindungen in wäßriger Phase vollständig oder teilweise gelöst, dispergiert und/oder suspendiert ist bzw. sind.

Der erste Schritt des erfindungsgemäßen Verfahrens besteht darin, eine wäßrige Zubereitung einer Titan(IV)verbindung mit einem oder mehreren wasserlöslichen Phosphaten der oben genannten allgemeinen Formeln (I) bis (III) umzusetzen. Als Titan(IV)verbindungen können grundsätzlich alle wasserlöslichen Verbindungen verwendet werden, in denen Titan in der Oxidationsstufe (IV) vorkommt. Die entsprechenden Verbindungen können Titan(IV)verbindungen sein, in denen das Übergangsmetall mit anorganischen oder auch mit organischen Liganden verknüpft ist. Es ist jedoch auch der Einsatz nicht oder nur schlecht wasserlöslicher Titan(IV)verbindungen möglich. Diese müssen jedoch in Wasser dispergierbar oder suspendierbar sein. Bevorzugt werden wasserlösliche und/oder dispergierfähige Titan(IV)-verbindungen aus der Gruppe Titantetrafluorid, Titantetrachlorid, Alkalimetallhexafluorotitanat, Titanoxidsulfat, Titandioxid, Titandioxidhydrat, Titandisulfat und Alkoxytitanat verwendet. Die Alkoxyreste der Alkoxytitanate können geradkettige oder verzweigte Alkylgruppen enthalten, deren Anzahl an

C-Atomen zwischen 1 und 4 liegt. Von den Alkalimetallhexafluorotitanaten sind besonders die Natrium- und Kaliumsalze zu nennen. Von diesen ist das Kaliumhexafluorotitanat als Titan(IV)komponente für das erfindungsgemäße Verfahren besonders bevorzugt.

Die Phosphatkomponente zur Herstellung der aktivierenden Titanphosphate kann aus einer großen Zahl wasserlöslicher Phosphate der oben genannten allgemeinen Formeln (I) bis (III) stammen. Erfindungsgemäß ist es möglich, eines der genannten Phosphate zu verwenden. Genauso besteht jedoch die Möglichkeit, eine Mischung mehrerer wasserlöslicher Phosphate der nachfolgend näher beschriebenen Typen zur Herstellung der aktivierenden Titan(IV)phosphate einzusetzen.

In einer bevorzugten Ausführungsform des Verfahrens werden Orthophosphate der allgemeinen Formel (I) verwendet

$M_mH_{3-m}PO_4$ (I)

in der
m für 0, 1, 2 oder 3 und
M für ein Alkalimetall stehen.

Es kommen somit Orthophosphate der allgemeinen Formel (I) aus der Gruppe Orthophosphorsäure, Monoalkalimetalldihydrogenphosphat, Dialkalimetallmonohydrogenphosphat und Trialkalimetallorthophosphat zur Verwendung. Bevorzugtes Alkalimetall in den Orthophosphaten der allgemeinen Formel (I) ist das Natrium. Die oben genannten Salze der Orthophosphorsäure sind also in bevorzugten Ausführungsformen des Verfahrens Natriumsalze.

In einer weiteren bevorzugten Ausführungsform des Verfahrens verwendet man als Phosphatkomponente zur Umsetzung mit den Titan(IV)verbindungen Polyphosphate der allgemeinen Formel (II)

$M_pH_{n+2-p}P_nO_{3n+1}$ (II)

in der
n für 2, 3 oder 4,
p für eine ganze Zahl im Bereich von 0 bis (n+2) und
M für ein Alkalimetall
stehen. Aus der Gruppe der Verbindungen der allgemeinen Formel (II) kommen also (p = 0) die sogenannten Polyphosphorsäuren in Frage, die dadurch entstehen, daß sich zwei oder mehrere Moleküle Orthophosphorsäure unter Wasserabspaltung zu kettenförmigen Molekülen in aus dem Stand der Technik bekannter Art zusammenlagern und dadurch kettenförmige Moleküle der allgemeinen Formel (IIa) entstehen,

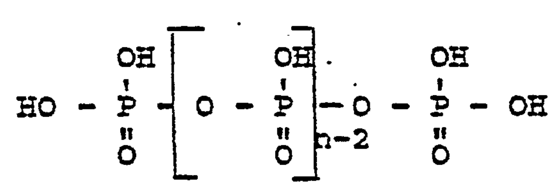

(IIa)

in der n für 2, 3 oder 4 steht.

Neben den so entstehenden Diphosphorsäuren (n = 2), Triphosphorsäuren (n = 3) und Tetraphosphorsäuren (n = 4) kommen jedoch auch deren Alkalimetallsalze in Frage, in denen - verglichen mit den oben genannten Polyphosphorsäuren - ein oder mehrere Wasserstoffatome durch Alkalimetallatome ersetzt sind. Bevorzugt werden die jeweiligen Natriumsalze verwendet. In der oben genannten allgemeinen Formel (II) können also einzelne (p = 1,2, ...) oder alle (p = n + 2) Wasserstoffatome durch Alkalimetallatome, bevorzugt Natriumatome, ersetzt sein.

In einer weiteren bevorzugten Ausführungsform des erfindungsgemäßen Verfahrens werden als Phosphate Metaphosphate der allgemeinen Formel (III) verwendet,

$(M_qH_{1-q}PO_3)_r$ (III)

in der
M für ein Alkalimetall,
r für eine ganze Zahl von 2 bis 20 und
q für 0 oder 1
stehen.

Aus der Gruppe der Verbindungen der allgemeinen Formel (III) sind also sowohl die freien Metaphosphorsäuren geeignet (q = 0), die die im wesentlichen aus dem Stand der Technik bekannte ringförmige Struktur aufweisen und üblicherweise durch Kondensationsreaktion aus den oben genannten Polyphosphorsäuren entstehen. Eines oder mehrere der in derartigen Polyphosphorsäuren an ein Sauerstoffatom gebundenen Wasserstoffatome können in derartigen ringförmigen Metaphosphaten durch ein oder mehrere Alkalimetallatom(e) ersetzt sein. Bevorzugtes Alkalimetallatom ist wiederum Natrium.

Aus den genannten Gruppen der Polyphosphate der allgemeinen Formel (II) und der Metaphosphate der allgemeinen Formel (III) sind mit besonderem Vorteil diejenigen Verbindungen der genannten allgemeinen Formeln verwendbar, in den M für Natrium und n für eine ganze Zahl von 2 bis 4 bzw. r für eine ganze Zahl von 2 bis 6 stehen.

Erfindungsgemäß werden die oben näher beschriebenen wäßrigen Zubereitungen von Titan(IV)verbindungen mit einem oder mehreren wasserlöslichen Phosphaten aus den oben genannten Gruppen unter den Bedingungen einer hydrothermalen Reaktion umgesetzt. Darunter werden (entsprechende der Definition in "Rompps Chemie-Lexikon", 8. Auflage (1983), Band III) solche Reaktionen verstanden, die in wäßriger Lösung bei Temperaturen von oberhalb 100 °C und Drucken oberhalb von 1 bar durchgeführt werden. Erfindungsgemäß haben sich Temperaturen von 100 bis 160 °C, bevorzugt Reaktionstemperaturen von 110 bis 140 °C, bewährt und liefern besonders gute Produkte, die in der Aktivierung von Metalloberflächen für die Zinkphosphatierung mit gutem Ergebnis eingesetzt werden können.

Die Umsetzung in den angegebenen Temperaturbereichen werden erfindungsgemäß unter autogenen Drucken von 1,0 bis 6,0 bar durchgeführt. Die Reaktionszeit bei den angegebenen Bedingungen beträgt üblicherweise 30 bis 180 min, bevorzugt 60 bis 120 min. Praktischerweise verwendet man für die erfindungsgemäße Umsetzung bei Bedingungen in den genannten Temperatur- und Druckbereichen einen geeigneten Druckreaktor, der mit entsprechenden Rührvorrichtungen und Heizvorrichtungen versehen ist.

Der pH-Wert der durch Zusammengeben der Titan(IV)-Verbindung und der Phosphatkomponente(n) erhaltenen Zubereitungen ist vor Beginn der Reaktion auf einen Wert im Bereich zwischen 6 und 12 einzustellen. Bevorzugt wird ein pH-Wert im Bereich zwischen 7 und 10 eingestellt. Dies kann auf beliebige, an sich bekannte Weise geschehen. Bevorzugt wird der pH-Wert durch Zugabe von wäßrigen Natriumhydroxid- oder Kaliumhydroxidlösungen oder von Schwefelsäure eingestellt. In bestimmten, erfindungsgemäß bevorzugten Ausführungsformen ist eine gesonderte Einstellung des pH-Wertes deswegen nicht erforderlich, weil sich beim Lösen bzw. Dispergieren der Komponenten in Wasser der erforderliche pH-Wert im Bereich von 6 bis 12 ohne weiteres einstellt. Dies ist z. B. bei Verwendung von Dinatriumhydrogenphosphat als Phosphatkomponente der Fall.

Um gut aktivierende Titan(IV)phosphate für die nachfolgende Metalloberflächen-Aktivierung zu erhalten, ist es erforderlich, das Stoffmengenverhältnis Titan(IV)verbindung : Phosphat(e) bei der hydrothermalen Umsetzung auf einen bestimmten Wert einzustellen. Die Umsetzung wird dazu bei einem Atomverhältnis Titan : Phosphor von 1 : 20 bis 1 : 60 durchgeführt. Ein Atomverhältnis 1 : 25 bis 1 : 40 ist dabei bevorzugt und ergibt im Zuge der hydrothermalen Umsetzung hochaktive Titan(IV)phosphate für die Aktivierung der Metalloberflächen vor der Zinkphosphatierung. Dies ist insbesondere dann der Fall, wenn als Titan(IV)verbindung Kaliumhexafluorotitanat(IV) und als Phosphatkomponente Dinatriumorthophosphat verwendet wird. Wird der Phosphatanteil in dem oben benannten speziellen Beispiel, insbesondere der Orthophosphatanteil, so erhöht, daß der Wert des Atomverhältnisses unter 1 : 20 fällt, so sinkt die Wirksamkeit des erhaltenen Titan(IV)phosphats deutlich und kann auch später nicht mehr erhöht werden. Die Phosphatmatrix spielt also bereits bei der Herstellung des Aktivierunsmittels eine überragende Rolle. Dies kann unter anderem darauf zurückgeführt werden, daß der hohe Phosphatanteil offensichtlich die Bildung kolloidal verteilter, hochaktivierender Titan(IV) phosphate begünstigt.

Der erfindungsgemäß bevorzugte Feststoffgehalt der im Zuge der hydrothermalen Umsetzung erhaltenen wäßrigen Suspensionen liegt zwischen 25 und 75, bevorzugt zwischen 30 und 60 Gew.-%, ist jedoch für den Erfolg des Verfahrens an sich weniger kritisch. Höhere Feststoffanteile sind jedoch aus verfahrenstechnischen Gründen nicht vorteilhaft, da sie eine Handhabung der Suspensionen im Folgeschritt des Verfahrens erschweren. Geringere Feststoffanteile wirken sich ungünstig auf die Qualität des Aktivierungsmittels aus und erniedrigen darüberhinaus die Raum-/Zeitausbeute. In der Praxis hat es sich besonders bewährt, als Reaktor für die hydrothermale Umsetzung einen Rührkessel zu verwenden. Kaliumhexafluorotitanat(IV) und Dinatriumorthophosphat (die besonders bevorzugten Reaktionskomponenten) werden in deionisiertem Wasser in den oben angegebenen Konzentrationsverhältnissen vorgelegt. Mit Natronlauge oder Kalilauge bzw. Schwefelsäure wird der pH-Wert auf den Bereich von 6 bis 12 eingestellt. Die Mischung wird dann unmittelbar mittels Wasserdampf, der dann in der Mengenbilanz berücksichtigt werden muß, oder indirekt über Mantelbeheizung bzw. Rohrschlangenbeheizung aufgeheizt und unter autogenem Druck von 1 bis 6 bar bei starkem Rühren 30 bis 180 min bei 100 bis 160 °C belassen. Das Umsetzungsprodukt liegt nach Ende der Reaktion als einheitliche, milchig-trübe Dispersion vor. Diese könnte, was grundsätzlich möglich ist, ohne Trocknungsschritt zur Aktivierung herangezogen werden. Bevorzugt wird sie entsprechend dem erfindungsgemäßen Verfahren in einem weiteren Verfahrensschritt zu einem Pulverprodukt aufgearbeitet.

Ein derartiges Titan(IV)phosphatpulver wird erfindungsgemäß dadurch erhalten, daß die entstandenen wäßrigen Suspensionen auf an sich bekannte Weise entwässert und zu einem Pulver mit einer Restfeuchte ≤ 5 % getrocknet werden. Dieser Entwässerungs- und Trocknungsschritt kann nach aus dem Stand der Tech nik an sich bekannten Verfahren durchgeführt werden. Erfindungsgemäß ist es bevorzugt, das Titan(IV)phosphatpulver dadurch zu erhalten, daß man die milchige Suspension einer Sprühtrocknung oder Zerstäubungstrocknung unterwirft. Diese erbringt überraschenderweise anwendungstechnisch besonders geeignete, d.h. stark aktivierende Titan(IV)phosphate. Dazu wird das wäßrige

Reaktionsgemisch in der nachfolgend beschriebenen Art und Weise über einen Sprüh- oder Zerstäubungsvorgang mittels geeigneter Aggregate fein verteilt. Anschließend wird unter Einwirkung heißer Luft das Wasser entfernt. Dabei fällt ein rieselfähiges Pulver mit einer Restfeuchte von 5 Gew.-% oder weniger an. Dieses läßt sich wiederum rasch und rückstandsfrei in Wasser dispergieren, wobei auf einem Sieb der Maschenweite von 50 µm weniger als 1 % Rückstand verbleibt. Für einen derartigen Zerstäubungs- und Trocknungsprozeß lassen sich die Mengenströme und Temperaturen für den Fachmann in einfacher Weise durch wenige orientierende Vorversuche ermitteln. Einzelheiten hierzu können auch der Literatur (beispielsweise K. Kröll, "Trocknungstechnik", Band 2 (Trockner und Trocknungsverfahren), 2. Auflage, Springer Verlag (Berlin) 1978, sowie K. Masters "Spray Drying Handbook", 3. Ausgabe, Verlag J. Wiley & Sons (New York) 1979) entnommen werden.

Eine bevorzugt verwendbare Zerstäubungseinrichtung läßt sich wie folgt beschreiben: Ein Zerstäuberrad in Form einer Scheibe mit einem Düsenkranz (Hersteller: Niro Atomizer, Minor-Production) rotiert mit hoher Geschwindigkeit um eine vertikale Achse. Die entsprechend dem ersten Verfahrensschritt erhaltene wäßrige Titan(IV)phosphatdispersion wird in der Mitte dieser Scheibe über die Achse zugepumpt und breitet sich unter Wirkung der Zentrifugalkraft nach allen Seiten zu einem Film aus, der die Scheibe bis zum Rand überzieht. Vom Scheibenrand tritt die Dispersion durch die Öffnungen des Düsenkranzes und wird mit einer von der Drehgeschwindigkeit der Scheibe abhängigen Ge schwindigkeit in den freien Raum der das Zerstäuberrad umgebenden Trocknungskammer geschleudert. Die Luftströmung der Heißluft innerhalb der Trocknungskammer bestimmt weitgehend die Teilchenbahn des zerstäubten Produktes. Der aufgeheizte, die Dispersionströpfchen enthaltende Luftstrom tritt durch einen Ringspalt in den Trocknungsraum. Ein Teil des Stromes wird durch einstellbare Leitschaufeln in eine zirkulare Drehung innerhalb der Trocknungskammer versetzt. Die die feuchten Titan(IV)phosphat-Partikel enthaltende Luft wird innerhalb der Trocknungskammer auf schraubenlinienförmiger Bahn vom Kopf der Trocknungskammer nach unten geführt. Der Hauptteil der Feuchtigkeit wird dem Produkt dabei meist schon im oberen Viertel des Trocknungsturms entzogen. Durch die Luftbewegung wird das Produkt abwärts geführt und fällt am Fuß des Trocknungsturms in einen Auffangtrichter, wo es weiterer Einwirkungen der Temperatur entzogen ist. Nur kleinere Partikel trennen sich bei einer scharfen Umlenkung der Trocknungsluft über dem Auffangtrichter nicht vom Luftstrom und müssen in nachgeschalteten Auffang-Einrichtungen (beispielsweise Zyklon oder Staubsack) von der die Feuchtigkeit abführenden Luft getrennt werden.

Die auf diesem Wege erhaltenen Titan(IV)phosphatpulver weisen eine Restfeuchte von 5 % oder weniger auf. Sie können in getrockneter Form gelagert, verpackt oder auch unmittelbar in Aktivierungsverfahren metallischer Oberflächen vor einer Zinkphosphatierung eingesetzt werden. Dazu werden sie probelmlos und ohne Rückstände in kurzer Zeit in Wasser dispergiert. Bei einer Aufgabe derartiger Dispersionen auf ein Sieb der Maschenweite 50 µm ergab sich ein Rückstand von weniger als 1 %.

Es ist jedoch auch möglich, die durch hydrothermale Umsetzung erhaltenen wäßrigen Titan(IV)phosphatdispersionen unmittelbar zur Aktivierung von Metalloberflächen vor einer Zinkphosphatie rung einzusetzen. Dazu werden die nach Ende der Reaktion vorliegenden einheitlichen, milchig-trüben Dispersionen mit entionisiertem Wasser verdünnt und dadurch auf einen für die Anwendung geeigneten Feststoffgehalt eingestellt. Dieser liegt vorteilhafterweise im Bereich zwischen 0,001 bis 10 Gew.-%, bezogen auf die gesamte wäßrige Dispersion, bevorzugt bei 0,01 bis 2 Gew.-%. Dies ist auch der Bereich des Feststoffgehaltes, den die oben beschriebenen, pulverförmigen Produkte nach ihrer Redispergierung in Wasser aufweisen.

Erfindungsgemäß werden die nach dem oben beschriebenen Verfahren erhaltenen, pulverförmigen Titan(IV)phosphate in Form ihrer wäßrigen Dispersionen mit Feststoffgehalten im Bereich von 0,001 bis 10 Gew.-%, bezogen auf die gesamte wäßrige Dispersion, bevorzugt im Bereich von 0,01 bis 2 Gew.-%, zur Aktivierung metallischer Oberflächen vor einer Zinkphosphatierung verwendet. Die Aufbringung der aktivierenden Komponenten auf die Metalloberflächen ist dem Fachmann aus dem Stand der Technik bekannt und wird üblicherweise durch Spritzen, Tauchen oder kombinierte Tauch-/Spritzverfahren bewirkt.

Überraschenderweise eignen sich entsprechend dem erfindungsgemäßen Verfahren hergestellte Titan(IV)phosphate, bei deren Herstellung die Raum-/Zeit-Ausbeute gegenüber bekannten Verfahren deutlich erhöht werden konnte, weit besser für die Aktivierung metallischer Oberflächen vor einer Zinkphosphatierung, als dies für entsprechend dem Stand der Technik hergestellte Titanphosphate erwartet werden kann. Dies ergibt sich daraus, daß bei der nachfolgenden Phosphatierung feinkristalline Zinkphosphatschichten erhalten werden, die deutlich niedrigere Schichtgewichte aufweisen als dies nach einer Aktivierung mit Titanphosphaten beobachtet wurde, die nach aus dem Stand der Technik bekannten Verfahren hergestellt wurden. Außerdem weisen mit den erfindungsgemäßen Titan(IV)phosphaten erhaltene Zinkphosphatschichten eine sehr einheitliche Kristallitgröße auf, was sich durch rasterelektronenmikroskopische Aufnahmen deutlich nachweisen ließ. Des weiteren können mit den nach dem erfindungsgemäßen Verfahren erhaltenen Titan(IV)phosphaten Aktivierungsbäder mit hoher Badkapazität gefahren werden, was letztlich nichts anderes bedeutet, als daß eine (summarisch gesehen) große Metalloberfläche pro Masse des eingesetzten Titan(IV)phosphat-Aktivierungsmittels aktiviert werden kann, ehe das Aktivierungsbad erschöpft ist. Es zeigt sich also, daß die entsprechend dem oben näher

beschriebenen Verfahren erhaltenen, pulverförmigen Titan(IV)phosphate zur Aktivierung metallischer Oberflächen vor einer Zinkphosphatierung besonders gut verwendet werden können. Dabei macht es keinen Unterschied, ob man Metalloberflächen aus Eisen, Stahl, Zink bzw. verzinktem Stahl oder Aluminium bzw. aluminiertem Stahl aktivieren und nachfolgend (insbesondere im Wege der sogenannten Niedrigzink-Phosphatierung) phosphatieren will.

Die Erfindung wird durch die nachfolgenden Beispiele näher erläutert.

Die Charakterisierung und Eignungsermittlung aktivierender Titanphosphate, insbesondere der entsprechend dem erfindungsgemäßen Verfahren erhaltenen Titan(IV)phosphate, setzt anwendungstechnische Erfahrung voraus. Sie ist anwendungsnah nur möglich und sinnvoll, wenn mittels des erhaltenen pulverförigen Titanphosphatproduktes wäßrige Dispersionen hergestellt, Prüfbleche damit behandelt (aktiviert) und anschließend phosphatiert werden. Erst die sich dabei ergebende Qualität der Zinkphosphatschicht über eine Vielzahl von Zyklen ergibt eine sichere Basis für die Beurteilung der aktivierenden Wirkung der erhaltenen Titanphosphate. Die Prüfbedingungen sind daher in den nachfolgenden Beispielen genau beschrieben. Sie verdeutlichen, daß die erfindungsgemäß erhaltenen Titan(IV)phosphate gegenüber den entsprechend dem Stand der Technik erhaltenen Titanphosphaten in reproduzierbar hoher Qualität hergestellt werden können und eine reproduzierbar hohe Aktivierungsleistung garantieren.

Um die aktivierende Wirkung der erfindungsgemäß hergestellten Titan(IV)phosphate im Vergleich zu Produkten des Standes der Technik zu bestimmen, wurden die Oberflächen von Stahlcoupons (Werkstoff St 1405 m; Abmessungen: 10 cm x 20 cm x 0,75 mm) mittels eines standardisierten Tauchphosphatierverfahrens phosphatiert, das aus folgenden Einzelschritten besteht

(a) mechanisches Reinigen und Entfetten mit saugfähigem Papier;

(b) chemische Reinigung und Entfetten unter Verwendung eines stark alkalischen, phosphathaltigen Tauchreinigers (beispielsweise Ridoline C 1501® der Firma Collardin (Köln), Konzentration: 5 Gew.-%) bei 80 bis 90 °C über 5 min;

(c) Spülen mit Leitungswasser (unbehandeltes Stadtwasser mit 18 °dH bei 20 °C über 1 min);

(d) Beizen mit einem Salzsäure- und Inhibitor-haltigen Entrostungs- und Entzunderungsmittel (beispielsweise Chemapix ACM der Firma Collardin (Köln), Konzentration: 30 Gew.-% bei 20 °C über 1 min);

(e) Spülen (wie (c));

(f) Aktivieren mit Titanphosphaten (übliche Konzentrationen: 0,2 Gew.-%; Temperatur: 20 °C; Behandlungszeit: 2 min);

(g) Phosphatieren mit einem handelsgängigen Phosphatierungsmittel (beispielsweise einem Nitrat-/Nitrit-beschleunigten Phosphatierungsmittel Granodine® der Firma Collardin (Köln), Konzentration: 3 Gew.-%) über 5 min bei 60 bis 70 °C;

(h) Spülen (siehe (c));

(i) Spülen mit vollentsalztem demineralisiertem Wasser bei 20 °C über 1/2 min; und

(j) Trocknen mit Druckluft von 20 °C bis zur Trocknung.

In den nachfolgenden Beispielen sind Abweichungen von den genannten Verfahrensschritten gesondert aufgeführt.

## Beispiel 1

### Bestimmung der Schichtgewichte (flächenbezogene Massen)

Die Schichtgewichte (angegeben in g Zinkphosphat/m² Metalloberfläche) geben leicht zu ermittelnde quantitative Hinweise auf die Wirksamkeit eines Aktivierungsmittels. Je besser die Aktivierung ist, umso niedriger sind nach dem Schritt des Phosphatierens die resultierenden Schichtgewichte. Dies wird auf die schichtverfeinernde Wirkung (kleinere Kristalle, dünnere Schichten) des Aktivierungsmittels zurückgeführt. Wie bereits oben erwähnt wurde, sind dünne, feinkristalline Schichten anwendungstechnisch besonders erwünscht, da sie eine besonders gute Grundlage für nachfolgend aufzubringende Lacke bilden. In der Praxis liegen die Schichtgewichte nicht aktivierter, ansonsten aber nach Standardverfahren phosphatierter Stahloberflächen erfahrungsgemäß zwischen 4,5 und 6 g/m². Nach Aktivierung gemäß aus dem Stand der Technik bekannten Verfahren liegen die Schichtgewichte von auf Stahloberflächen abgeschiedenen Zinkphosphatschichten zwischen 3,0 und 4 g/m², im Falle sehr gut aktivierter Stahloberflächen bei 1,6 bis 3 g/m².

Zur Bestimmung der Schichtgewichte wurden die oben beschriebenen Stahlcoupons nach Aktivierung und Phosphatierung sowie anschließender Konditionierung gemäß dem oben genannten Standardverfahren gewogen. Danach wurden sie 10 min lang mit 5 %iger Chromsäurelösung (Chromtrioxid in vollentsalztem Wasser) bei 70 °C behandelt. Dadurch wurden die gebildeten Zinkphos phatschichten vollständig abgelöst. Die Stahlcoupons wurden danach sofort wieder gewogen. Aus der Gewichtsdifferenz zwischen phosphatierten und chromsäurebehandelten, d.h. von der gebildeten Phosphatschicht wieder befreiten Prüfblechen wurden die Schichtgewichte ermittelt. Wegen der experimentellen Schwankungsbreite (± 0,3 g/m²) wurden jeweils zehn Bestimmungen ausgeführt. Die Werte wurden über alle zehn Bestimmungen gemittelt.

Zur Herstellung der erfindungsgemäßen Titan(IV)phosphate wurden in einem mit Mantelbeheizung und Rührwerk versehenen Druckkessel (Fassungsvermögen 100 l) 1,25 kg (5,2 mol) Kaliumhexafluorotitanat, 25 kg (176 mol) Dinatriumhydrogenphosphat (Molverhältnis Titanatkomponente : Phosphatkomponente 1 : 33,8) und 56 kg Wasser vorgelegt und gründlich miteinander vermischt. Danach wurde das Gemisch, dessen pH-Wert bei 8,5 lag, auf die in der nachfolgenden Tabelle 1 angegebenen Temperaturen aufgeheizt und unter Rühren belassen.

Nach Beendigung der Umsetzung wurden die so erhaltenen, milchig-trüben Dispersionen bis zur Weiterverarbeitung von 70 °C abgekühlt und bei dieser Temperatur belassen, um das Auskristallisieren der überschüssigen Phosphatkomponente zu vermeiden.

Die erhaltenen Dispersionen wurden auf einen Feststoffgehalt von 0,2 Gew.-% (Summe der Umsetzungsprodukte aus Kaliumhexafluorotitanat und Dinatriumorthophosphat) eingestellt und zur Aktivierung der Metalloberflächen in dem oben beschriebenen Phosphatierverfahren verwendet. Die erhaltenen Schichtgewichte ergeben sich aus der nachfolgenden Tabelle 1.

Vergleichsbeispiel 1

Entsprechend der in Beispiel 1 beschriebenen Verfahrensweise wurden Titanorthophosphat-Dispersionen unter nicht-hydrothermalen Bedingungen (Reaktionstemperaturen unter 100 °C) hergestellt. Die Ergebnisse sind ebenfalls der nachfolgenden Tabelle 1 zu entnehmen.

Tabelle 1

Hydrothermale Herstellung[a] aktivierender Titan(IV)orthophosphate unter Variation von Reaktionszeit und -temperatur, nach Aktivierung mit den Produkten erhaltene Schichtgewichte der Zinkphosphatierung

| Beispiel bzw. Vergleichs-bsp. Nr. | Reaktionzeit (min) | Reaktionstemp. (°C) | Schichtgewichte[b] ($g/m^2$) |
|---|---|---|---|
| 1a | 30 | 100 | 3,0 |
| 1b | 30 | 120 | 2,7 |
| 1c | 60 | 120 | 2,5 |
| 1d | 180 | 120 | 2,1 |
| 1e | 30 | 140 | 2,3 |
| 1f | 60 | 140 | 1,8 |
| 1g | 180 | 140 | 2,8 |
| 1h | 60 | 160 | 3,0 |
| Vgl. 1a | 1 Woche | 20 | 5,0[c] |
| Vgl. 1b | 180 | 50 | 5,0[c] |
| Vgl. 1c | 180 | 80 | 3,5[c] |

[a] weitere Versuchsbedingungen: s. Text
[b] nach Standardphosphatierung (s. Text)
[c] keine geschlossenen Zinkphosphatschichten

Ergebnis:

Ein Vergleich der Schichtgewichte in Tabelle 1 belegt, daß mit den Titan(IV)orthophosphaten, die erfindungsgemäß erhalten wurden, befriedigende bis gute Schichtgewichte in der nachfolgenden Zinkphosphatierung erzielt werden konnten. Im Gegensatz dazu zeigen die mit Titanphosphaten entsprechend Vergleichsbeispiel 1 erhaltenen Schichtgewichte, daß diese Produkte eine deutlich schlechtere Eignung als Aktivierungsmittel haben. Es werden sogar zum Teil Schichtgewichte erhalten, die schlechter als die Schichtgewichte sind, die auf nichtaktivierten, ansonsten aber nach dem Standardverfahren phosphatierten Stahloberflächen gefunden wurden.

Beispiel 2

Kaliumhexafluorotitanat und Dinatriumhydrogenphosphat wurden in den in Tabelle 2 aufgeführten Molverhältnissen entsprechend der in Beispiel 1 beschriebenen Vorgehensweise vermischt und in Wasser gelöst, so daß die in Tabelle 2 angegebenen Feststoffgehalte resultieren. Anschließend wurde die erhaltene Mischung, deren pH-Wert bei 8,5 lag, jeweils 1 h lang bei 140 °C und 5 bar Druck gerührt.

Zur Ermittlung der aktivierenden Eigenschaften der erhaltenen Reaktionsprodukte wurden die auf diesem Wege erhaltenen wäßrigen Dispersionen ohne vorherige Trocknung auf einen Feststoffgehalt von 0,2 Gew.-% eingestellt und für das oben beschriebene Standardphosphatierverfahren herangezogen. Die Ergebnisse (Schichtgewichte) sind der nachfolgenden Tabelle 2 zu entnehmen.

Vergleichsbeispiel 2

Entsprechend der in Beispiel 2 beschriebenen Vorgehensweise wurden Titan(IV)phosphate hergestellt, ohne das erfindungsgemäß bevorzugte Molverhältnis einzuhalten. Die Ergebnisse der Zinkphosphatierung (Schichtgewichte) mit derartigen Titanphosphaten sind ebenfalls der nachfolgenden Tabelle 2 zu entnehmen.

Tabelle 2

Hydrothermale Herstellung von Titanphosphatdispersionen unter Variation der Molverhältnisse und Feststoffkonzentrationen im Ansatz und damit in der Zinkphosphatierung erhaltene Ergebnisse

| Beispiel Nr. | Molverhältnis $K_2TiF_6/Na_2HPO_4$ | Feststoff-konz. (Gew.-%) | Schichtgewichte[a] ($g/m^2$) |
|---|---|---|---|
| 2a | 1 : 27 | 65 | 3,0 |
| 2b | 1 : 27 | 50 | 2,5 |
| 2c | 1 : 33 | 33 | 1,9 |
| 2d | 1 : 33 | 60 | 2,3 |
| 2e | 1 : 40 | 50 | 2,0 |
| 2f | 1 : 40 | 60 | 2,4 |
| 2g | 1 : 24 | 70 | 3,0 |
| 2h | 1 : 48 | 50 | 2,9 |
| 2i | 1 : 60 | 33 | 3,1 |
| Vgl. 2a | 1 : 1 | 30 | 4,1 |
| Vgl. 2b | 1 : 6 | 40 | 6,4 |
| Vgl. 2c | 1 : 12 | 33 | 4,8 |
| Vgl. 2d | 1 : 80 | 33 | 4,3 |

a) nach Standardphosphatierung gemäß Text

Ergebnis:

Es zeigte sich, daß die entsprechend dem erfindungsgemäßen Verfahren hergestellen Aktivierungsprodukte zufriedenstellende bis gute Schichtgewichte bei der nachfolgenden Zinkphosphatierung ergaben. Im Gegensatz dazu konnten mit den gemäß Vergleichsbeispiel 2 erhaltenen Aktivierungsmitteln befriedigende Schichtergebnisse nicht erhalten werden. Derartige Aktivie rungsmittel kommen somit für einen Einsatz bei qualitativ anspruchsvollen Beschichtungen nicht in Betracht.

Beispiel 3

1 000 kg einer gemäß den Beispielen 1c bis 1f (Tabelle 1) hydrothermal hergestellten Titan(IV)phosphat-Dispersionen wurden über einen Zerstäubungstrockner (Typ Niro-Atomizer) versprüht. Dabei wurde durch eine Begleitheizung dafür gesorgt, daß die Temperatur der Dispersion 70 °C nicht unterschritt. Die Sprühbedingungen wurden über den gesamten Trocknungsprozeß konstant gehalten:
Zuluft-Temperatur: 350 °C;
Abluft-Temperatur: 125 °C;
Scheibendrehzahl: 17 000 U/min (bei einem Scheibendurchmesser von 170 mm).

Die entstandenen, feinpulvrigen Produkte wiesen einen Feuchtigkeitsgehalt zwischen 2,8 und 4,5 Gew.-% auf (vgl. Tabelle 3). Sie ließen sich in Wasser gut dispergieren und erbrachten bei Naßsiebung (Maschenweite der Siebe: 50 µm) weniger als 1 Gew.-% Rückstand.

Zur Feststellung der aktivierenden Eigenschaften der sprühgetrockneten Titan(IV)phosphate wurden von den erhaltenen pulverförmigen Produkten 0,2 gew.-%ige Dispersionen hergestellt. Die Prüfung auf die aktivierenden Eigenschaften derartiger Dispersionen erfolgte nach den oben beschriebenen Standard-Bedingungen. Die Ergebnisse sind der nachfolgenden Tabelle 3 zu entnehmen.

Tabelle 3

Eigenschaften sprühgetrockneter Aktivierungsmittel und damit erhaltene Ergebnisse

| Beispiel Nr. | Suspension gem. Bsp. | Trockenprodukt Gew.-% Wasser[1)] | Schichtgewicht ($g/m^2$)[2)] |
|---|---|---|---|
| 3a | 1c | 2,8 | 2,1 |
| 3b | 1d | 4,6 | 1,8 |
| 3c | 1e | 3,1 | 2,0 |
| 3d | 1f | 3,8 | 1,6 |

1) Trockenverlust nach 1 h bei 120 °C
2) nach Standardphosphatierung gemäß Text

Ergebnis:

Die erfindungsgemäß erhaltenen und getrockneten Titan(IV)phosphatpulver ergaben nach ihrer Dispersion in Wasser eine gute Aktivierung der damit behandelten Metalloberflächen; es wurden niedrige Schichtgewichte in der nachfolgenden Zinkphosphatierung erhalten.

Beispiel 4

Die gemäß den Beispielen 1 bis 3 aufgezeigten Ergebnisse im Hinblick auf die bei der nachfolgenden Zinkphosphatierung erhaltenen Schichtgewichte stellen allein noch kein ausreichendes Kriterium für die aktivierende Wirksamkeit der erfindungsgemäß erhaltenen Titan(IV)phosphate dar. Ein weiteres Kriterium ergibt sich aus der optischen Beurteilung der Zinkphosphatschichten nach rasterelektronenmikroskopischen Aufnahmen. Diese sind erfahrungsgemäß von hoher Tiefenschärfe und lassen die Unterschiede in der Form und Morphologie der Kristalle deutlich erkennen, die die Zinkphosphatschicht bilden. Dabei werden Unterschiede zwischen gut aktivierten und schlecht aktivierten Stahloberflächen sichtbar.

Insbesondere wird die Größe der Kristalle vom Aktivierungsmittel bestimmt und kann daher als weiterer Parameter für die Wirksamkeit der erhaltenen Aktivierungsmittel herangezogen werden. Bei gut aktivierten Metalloberflächen geht das Kristallwachstum von sehr vielen Einzelpunkten aus, die als Kristallisationskeime wirken, während bei nicht oder nur schlecht aktivierten Metalloberflächen nur an vereinzelten Punkten ein Kristallwachstum zu beobachten ist. Die Kristallitgröße ist bei gut aktivierten Metalloberflächen sehr einheitlich. Die rasterelektronenmikroskopischen Aufnahmen solcher gut aktivierter Metalloberflächen zeigen Zinkphosphatkristalle in Kubusform, die entweder parallel oder senkrecht zur Oberfläche aufgewachsen sind. Im "Niedrig-Zink-Verfahren" werden Phosphatschichten erhalten, die in den rasterelektronenmikroskopischen Aufnahmen der Eindruck von Blöcken und/oder Quadern vermitteln. Bei nicht bzw. unzureichend aktivierten Prüfblechen erkennt man freie Metalloberflächen; die gebildeten Kristalle sind stark verästelt und ohne charakteristische Form.

Repräsentative charakteristische rasterelektronenmikroskopische Aufnahmen sowohl gut aktivierter als auch schlecht aktivierter Metalloberflächen mit folglich befriedigenden oder nicht geeigneten Zinkphosphatschichten finden sich bei "S. Maeda, Progress in Organic Coatings 11, 11 (1983)".

Rasterelektronenmikroskopische Aufnahmen zinkphosphatierter Stahloberflächen, die mit Titan(IV)phosphaten gemäß Beispiel 1 aktiviert wurden, zeigen die Morphologie von Zinkphosphat schichten hervorragender Qualität: Sie weisen Kubusform auf und sind parallel bzw. senkrecht zur Oberfläche aufgewachsen.

Rasterelektronenmikroskopische Aufnahmen von Zinkphosphatschichten auf Metalloberflächen, die mit gemäß Beispiel 2 hergestellten Titan(IV)phosphaten aktiviert wurden. zeigen ebenfalls eine Kubusform der Zinkphosphatkristalle, die ebenfalls parallel bzw. senkrecht zur Metalloberfläche gewachsen sind.

Im Gegensatz dazu sind die Zinkphosphatkristalle nach Aktivierung gemäß Vergleichsbeispiel 2 grob und ungleichmäßig.

Die Rasterelektronenmikroskopischen Aufnahmen von Zinkphosphatschichten, die nach Aktivierung mit Titan(IV)phosphaten gemäß Beispiel 3 aktiviert wurden, zeigen ebenfalls kubisch geformte Kristalle, die parallel bzw. senkrecht zur Metalloberfläche aufgewachsen sind. Die erhaltenen Zinkphosphatschichten sind also ebenfalls von hervorragender Qualität.

Beispiel 5

Die Meßgröße "Badkapazität" soll angeben, wieviel Metalloberfläche pro Masse Aktivierungsmittel aktiviert werden kann, ehe das Aktivierungsbad erschöpft ist. Diese Zahl ist daher ebenfalls ein Maßstab für die Qualität der aktivierenden Titan(IV)phosphate, die gemäß der vorliegenden Erfindung erhalten werden.

Die Badkapazitäten verschiedener gemäß den obigen Beispielen 1 bis 3 hydrothermal hergestellter und auf 0,2 Gew.-% Aktivsubstanz im Anwendungsbad eingestellter Titan(IV)phosphatdispersionen wurden bestimmt. Hierzu wurden die Aktivierungsbäder bis zur Baderschöpfung mit Prüfblechen der oben angegebenen Qualität und Größe belastet. Ohne Zugabe neuer, erfindungsgemäß hergestellter Aktivierungsmittel wurde im Rahmen des oben beschriebenen Standardphosphatierverfahrens eine Vielzahl von Blechen nacheinander in das Bad eingetaucht. Die Bäder galten dann als erschöpft, wenn zehn aufeinanderfolgende Bleche nach der anschließenden Phosphatierung Fehlstellen oder grob kristalline Bereiche aufwiesen. Die Ergebnisse sind in der nachfolgenden Tabelle 4 angegeben.

Tabelle 4

Badkapazitäten = $m^2$ aktivierte Stahloberfläche pro g Aktivierungsmittel (Feststoff)

| Produkt gem. Beispiel Nr. | Schichtgewichte ($m^2/g$)[1)] | Badkapazitäten ($m^2/g$) |
|---|---|---|
| 1a | 3,0 | 1,6 |
| 1b | 2,7 | 3,6 |
| 1c | 2,5 | 2,4 |
| 1d | 2,1 | 3,1 |
| 1e | 2,3 | 2,8 |
| 1f | 1,8 | 3,5 |
| 2c | 1,9 | 1,8 |
| 2d | 2,3 | 1,2 |
| 2g | 3,0 | 0,9 |
| 2h | 2,9 | 1,8 |
| 3a | 2,1 | 4,0 |
| 3b | 1,8 | 3,0 |
| 3c | 2,0 | 2,5 |
| 3d | 1,6 | 1,9 |
| Vgl. 1b | 5,0 | -[2)] |
| Vgl. 1c | 5,0 | -[2)] |
| Vgl. 2a | 4,1 | 0,2 |

1) vgl. Tabellen 1 bis 3

2) nicht bestimmbar, keine geschlossenen Zinkphosphatschichten

## Patentansprüche

1. Verfahren zur Herstellung von aktivierenden Titanphosphaten für die Zinkphosphatierung durch Umsetzen einer Titanverbindung mit einfachen oder kondensierten Phosphaten in wäßriger Phase, dadurch gekennzeichnet, daß man

a) eine Titan(IV)verbindung, die in wäßriger Phase vollständig oder teilweise gelöst, dispergiert und/oder suspendiert ist, bei Temperaturen oberhalb von 100°C und Drücken oberhalb von 1 bar bei einem pH-Wert im Bereich zwischen 6 und 12 mit einem oder mehreren wasserlöslichen Phosphaten der allgemeine Formel (I) und/oder (II) und/oder (III) hydrothermal umsetzt,

$M_mH_{3q-m}PO_4$ (I)
$M_pH_{n+2-p}P_nO_{3n+1}$ (II)
$(M_qH_{1-q}PO_3)_r$ (III)
in denen
M für ein Alkalimetall steht und
m 0, 1, 2 oder 3,
n 2, 3 oder 4,
p 0, 1, 2, ...n + 2,
q 0 oder 1 bedeuten, und
r eine ganze Zahl von 2 bis 20 bedeuten, wobei man ein Atomverhältnis Titan:Phosphor von 1:20 bis 1:60 einhält, und
b) die entstehenden wäßrigen Dispersionen entweder nach Einstellen von Feststoffgehalten im Bereich von 0,001 bis 10 Gew.-% mit Wasser unmittelbar zur Aktivierung von Metalloberflächen vor einer Zinkphosphatierung einsetzt oder unter Erhalt eines Titan(IV)phosphatpulvers mit einer Restfeuchte ≤ 5% auf an sich bekannte Weise entwässert und trocknet.

2. Verfahren nach Anspruch 1, dadurch gekennzeichnet, daß man Titan(IV)verbindungen aus der Gruppe Titantetrafluorid, Titantetrachlorid, Alkalimetallhexafluorotitanat, Titanoxidsulfat, Titandioxid, Titandioxidhydrat, Titandisulfat und Alkoxytitanat, bevorzugt Kaliumhexafluorotitanat, verwendet.

3. Verfahren nach Ansprüchen 1 und 2, dadurch gekennzeichnet, daß man als Phosphate Orthophosphate der allgemeinen Formel (I) verwendet,
$M_mH_{3-m}PO_4$ (I)
in der M für Natrium steht.

4. Verfahren nach Ansprüchen 1 und 2, dadurch gekennzeichnet, daß man als Phosphate Polyphosphate der allgemeinen Formel (II) verwendet,
$M_pH_{n+2-p}P_nO_{3n+1}$ (II)
in der M für Natrium und n für 2, 3 oder 4 stehen.

5. Verfahren nach Ansprüchen 1 und 2, dadurch gekennzeichnet, daß man als Phosphate Metaphosphate der allgemeinen Formel (III) verwendet,
$(M_qH_{1-q}PO_3)_r$ (III)
in der M für Natrium und r für eine ganze Zahl von 2 bis 6 stehen.

6. Verfahren nach Ansprüchen 1 bis 5, dadurch gekennzeichnet, daß man die Umsetzung unter Einstellung eines Atomverhältnisses Titan:Phosphor von 1:25 bis 1:40 durchführt.

7. Verfahren nach Ansprüchen 1 bis 6, dadurch gekennzeichnet, daß man die Umsetzung bei Temperaturen von 100 bis 160°C, bevorzugt bei 110 bis 140°C, durchführt.

8. Verfahren nach Ansprüchen 1 bis 6, dadurch gekennzeichnet, daß man die Umsetzung bei Drucken von 1,0 bis 6,0 bar durchführt.

9. Verfahren nach Ansprüchen 1 bis 8, dadurch gekennzeichnet, daß man vor Beginn der hydrothermalen Umsetzung den pH-Wert auf einen Bereich zwischen 7 und 10 einstellt.

10. Verfahren nach Ansprüchen 1 bis 9, dadurch gekennzeichnet, daß man die entstehenden wäßrigen Titan(IV)phosphatdispersionen durch Sprühtrocknung oder Zerstäubungstrocknung auf eine Restfeuchte des Titan(IV)phosphatpulvers von ≤ 5% trocknet.

11. Verfahren nach Anspruch 10, dadurch gekennzeichnet, daß man die entstehenden wäßrigen Titan(IV)phosphatdispersionen durch Sprühtrocknung oder Zerstäubungstrocknung zu einem Titan(IV)phosphatpulver mit weniger als 5% Restfeuchte und weniger als 1% Naßsiebrückstände (Sieb mit einer Maschenweite von 50 µm) trocknet.

12. Verfahren nach Ansprüchen 1 bis 9, dadurch gekennzeichnet, daß man die durch hydrothermale Umsetzung erhaltenen wäßrigen Titan(IV)phosphatdispersionen durch Wasserzugabe auf einen Feststoffgehalt von 0,01 bis 2 Gew.-% einstellt.

## Claims

1. A process for the production of activating titanium phosphates for zinc phosphating by reaction of a titanium compound with simple or condensed phosphates in aqueous phase, characterized in that
a) a titanium(IV) compound completely or partly dissolved, dispersed and/or suspended in aqueous phase is hydrothermally reacted at temperatures above 100°C and pressures above 1 bar and at a pH value of 6 to 12 with one or more water-soluble phosphates corresponding to general formula (I) and/or (II) and/or (III)
$M_mH_{3-m}PO_4$ (I)
$M_pH_{n+2-p}P_nO_{3n+1}$ (II)
$(M_qH_{1-q}PO_3)_r$ (III)
in which
M is an alkali metal,
m is 0, 1, 2 or 3,
n is 2, 3 or 4,

p is 0, 1, 2, ...n + 2,
q is 0 or 1 and
r is an integer of 2 to 20,
an atomic ratio of titanium to phosphorus of 1:20 to 1:60 being maintained during the reaction, and

b) the aqueous dispersions formed either are directly used after adjustment of solids contents of 0.001 to 10% by weight with water for activating metal surfaces before zinc phosphating or are freed from water and dried to a residual moisture content of ≤ 5% in known manner to form a titanium(IV) phosphate powder.

2. A process as claimed in claim 1, characterized in that titanium(IV) compounds from the group consisting of titanium tetrafluoride, titanium tetrachloride, alkali metal hexafluorotitanate, titanium oxide sulfate, titanium dioxide, titanium dioxide hydrate, titanium disulfate and alkoxy titanate, preferably potassium hexafluorotitanate, are used.

3. A process as claimed in claims 1 and 2, characterized in that orthophosphates corresponding to general formula (I)

$M_mH_{3-m}PO_4$ (I)

in which M is sodium, are used as the phosphates.

4. A process as claimed in claims 1 and 2, characterized in that polyphosphates corresponding to general formula (II)

$M_pH_{n+2-p}P_nO_{3n+1}$ (II)

in which M is sodium and n is 2, 3 or 4, are used as the phosphates.

5. A process as claimed in claims 1 and 2, characterized in that metaphosphates corresponding to general formula (III)

$(M_qH_{1-q}PO_3)_r$ (III)

in which M is sodium and r is an integer of 2 to 6, are used as the phosphates.

6. A process as claimed in claims 1 to 5, characterized in that an atomic ratio of titanium to phosphorus of 1:25 to 1:40 is maintained during the reaction.

7. A process as claimed in claims 1 to 6, characterized in that the reaction is carried out at temperatures of 100 to 160°C, preferably of 110–140°C.

8. A process as claimed in claims 1 to 6, characterized in that the reaction is carried out under pressures of 1.0 to 6.0 bar.

9. A process as claimed in claims 1 to 8, characterized in that the pH is adjusted to a value of 7 to 10 before the beginning of the hydrothermal reaction.

10. A process as claimed in claims 1 to 9, characterized in that the aqueous titanium(IV) phosphate dispersions formed are dried to a residual moisture content of ≤ 5% in the titanium(IV) phosphate powder by spray-drying.

11. A process as claimed in claim 10, characterized in that the aqueous titanium(IV) phosphate dispersions formed are spray-dried to a titanium(IV) phosphate powder with less than 5% residual moisture and less than 1% wet sieving residue (50 µm mesh sieve).

12. A process as claimed in claims 1 to 9, characterized in that the aqueous titanium(IV) phosphate dispersions obtained by hydrothermal reaction are adjusted to a solids content of 0.01 to 2% by weight by addition of water.

## Revendications

1. Procédé de production de phosphates de titane activés pour la phosphatation du zinc par réaction d'un composé de titane avec des phosphates simples ou condensés en phase aqueuse, caractérisé en ce que

a) on fait réagir un composé de titane tétravalent dissous, dispersé et/ou mis en suspension, totalement ou partiellement, en phase aqueuse, à des températures supérieures à 100°C et à des pressions supérieures à 1 bar avec une valeur de pH comprise dans le domaine allant de 6 à 12 avec un ou plusieurs phosphates solubles dans l'eau suivant la formule générale (I) et/ou (II) et/ou (III) par voie hydrothermale,

$M_mH_{3-m}PO_4$ (I)
$M_pH_{n+2-p}P_nO_{3n+1}$ (II)
$(M_qH_{1-q}PO_3)_r$ (III)

dans lesquelles
M représente un métal alcalin et
m représente 0, 1, 2 ou 3
n représente 2, 3 ou 4
p représente 0, 1, 2, ... n + 2,
q représente 0 ou 1 et
r représente un nombre entier allant de 2 à 20, en respectant un rapport atomique titane:phosphore compris dans la gamme allant de 1:20 à 1:60, et

b) on utilise les dispersions aqueuses ainsi obtenues, soit après avoir amené les teneurs en matières solides dans la plage allant de 0,001 à 10% en poids avec de l'eau immédiatement pour activer les surfaces métalliques avant une phosphatation du zinc ou on les déshydrate et sèche, de manière à obtenir une poudre de phosphate de titane tétravalent ayant une humidité résiduelle ≤ 5% en opérant d'une manière connue en soi.

2. Procédé selon la revendication 1, caractérisé en ce que l'on utilise des composés de titane de type tétravalent choisis dans le groupe constitué du tétrafluorure de titane, du tétrachlorure de titane, de l'hexafluorotitanate d'un métal alcalin, du sulfate-oxyde de titane, du dioxyde de titane, du dioxyde de titane hydraté, du disulfate de titane et des titanates d'alcoxy, mais en préférant l'hexafluorotitanate de potassium.

3. Procédé selon les revendications 1 et 2, caractérisé en ce que l'on utilise comme phosphate des orthophosphates suivant la formule générale (I)

$M_mH_{3-m}PO_4$ (I)

dans laquelle M représente du sodium.

4. Procédé selon les revendications 1 et 2, caractérisé en ce que l'on utilise comme phosphate des polyphosphates suivant la formule générale (II)

$M_pH_{n+2-p}P_nO_{3n+1}$ (II)

dans laquelle M représente du sodium et n représente 2, 3 ou 4.

5. Procédé selon les revendications 1 et 2, caractérisé en ce que l'on utilise comme phosphate des métaphosphates, suivant la formule générale (III)

$(M_qH_{1-q}PO_3)_r$ (III)

dans laquelle M représente du sodium et r un nombre entier allant de 2 à 6.

6. Procédé selon les revendications 1 à 5, caractérisé en ce que l'on effectue la réaction en choisissant un rapport atomique titane:phosphore compris dans la plage allant de 1:25 à 1:40.

7. Procédé selon les revendications 1 à 6, caractérisé en ce que l'on effectue la réaction à des températures comprises dans la plage allant de 100 à 160°C et, de préférence, de 110 à 140°C.

8. Procédé selon les revendications 1 à 6, caractérisé en ce que l'on effectue la réaction sous des pressions comprises dans la gamme allant de 1 à 6 bar.

9. Procédé selon les revendications 1 à 8, caractérisé en ce que l'on ajuste le pH à une valeur comprise dans le domaine allant de 7 à 10, avant le début de la réaction hydrothermale.

10. Procédé selon les revendications 1 à 9, caractérisé en ce que l'on sèche les dispersions aqueuses de phosphate de titane tétravalent ainsi obtenues par séchage par pulvérisation ou par séchage par projection, de manière à obtenir une humidité résiduelle de la poudre de phosphate de titane tétravalent ≤ 5%.

11. Procédé selon la revendication 10, caractérisé en ce que l'on sèche les dispersions aqueuses de phosphate de titane tétravalent ainsi obtenues par séchage par pulvérisation ou par séchage par projection, de manière à obtenir une poudre de phosphate de titane tétravalent dont l'humidité résiduelle est inférieure à 5% et avec moins de 1% de résidus de tamisage humides (tamis avec des mailles de 50 µm).

12. Procédé selon les revendications 1 à 9, caractérisé en ce que l'on adapte la teneur en matières solides des dispersions aqueuses de phosphate de titane tétravalent obtenues par réaction hydrothermale en y ajoutant de l'eau, de manière à obtenir une valeur comprise entre 0,01 et 2% en poids.